# EUROPEAN PATENT APPLICATION

(11) **EP 1 681 871 A1**
(43) Date of publication of application: **19.07.2006**
(21) Application number: 04799601.2
(22) Date of filing: 04.11.2004
(51) Int. Cl.: H04N 5/91

(54) **INFORMATION RECORDING APPARATUS, INFORMATION RECORDING METHOD, AND RECORDING PROGRAM**

(30) Priority: 05.11.2003 JP 2003375610
(71) Applicant: Konica Minolta Photo Imaging, Inc., Shinjuku-ku, Tokyo 163-0512 (JP)
(72) Inventor: Ueda, Yutaka c/o Konica Minolta Photo Imaging,Inc., Hachioji-shi, Tokyo 192-8505 (JP)
(74) Representative: Gille Hrabal Struck Neidlein Prop Roos
(86) International application number: PCT/JP2004/016707
(87) International publication number: WO 2005/046229

(57) **Abstract**

Provided with at least a file input section 10 that inputs image files from a digital camera or its media, a number of pixels comparing section 12 that compares the number of pixels in the image file that has been input with a prescribed number of pixels having a higher resolution than the normal number of pixels of the standard, when the number of pixels are different, a number of pixels conversion section 13a that converts that image file, irrespective of the number of pixels in the original image file, so that its number of pixels becomes equal to a prescribed number of pixels, a file format conversion section 13b that converts an image file into a format in which the file can be reproduced by the image reproduction device, and a file recording section 14 that records the converted image file, or the converted image file and the input image file, and can always record the image file in the recording medium with a large number of pixels.

## Description

### TECHNICAL FIELD

The present invention relates to information recording apparatuses, and to information recording methods and recording programs, and in particular, to information recording apparatuses, and to information recording methods and recording programs that record image files in recording media with a high resolution pixel count.

### TECHNICAL BACKGROUND

In recent years, various services are being offered relating to photographs. For example, when a user takes photographs using a digital camera and brings in the digital camera or the media for the digital camera in which image files of the photographs have been recorded to a photo shop such as a Minilab, a service of reading in the image files from the digital cameras or the media for digital cameras using an information recording apparatus in the photo shop and recording them in a CD-R or a DVD-R (for example, Japanese Unexamined Patent Application Open to Public Inspection No. Hei 5-182373 (pp 4-6, Fig. 3), etc.). Further, services are also provided of converting still image files or video image files obtained by photographing using a digital camera are converted into files of Video-CD or DVD-Video or other formats that can be reproduced in an image reproducing device such as a DVD player or a DVD recorder and recording the files in a recording medium such as a CD-R, a DVD-R, etc.

In a digital camera, although a series of image files are recorded as files with a number of pixels determined by the photographing section, for example, when preparing Video-CD standard files based on still image files obtained from a digital camera, usually, the file is prepared by converting to the standard number of pixels of the Video-CD standard (360 x 240 pixels, etc,). The standard number of pixels of this Video-CD standard has been set so that it is possible to reproduce about 90 minutes of video from a CD-R of a capacity of about 700M, there is the problem that the image files with a high image quality obtained from a digital camera cannot be reproduced sufficiently with this level of number of pixels.

Here, when preparing video image files that can be reproduced in an image reproducing device based on still image files obtained from a digital camera, although a video files of a slide show in which the still images are displayed at a fixed interval, since the reproduction time of a slide show is on the order of a few minutes to several tens of minutes at the most, there is sufficient excess capacity in the recording media such as a CD-R, etc., it is possible to prepare files with the number of pixels for a higher resolution than the standard number of pixels, and it is hard to say that the current CD-R writing service is utilizing sufficiently the capacity of the recording medium.

Further, there are times when the size of the image file to be recorded itself exceeds the recordable capacity of the recording medium such as a CD-R, a DVD-R, or a Blu-ray disk, etc., and although it is necessary to reduce the size of the image file in this case, if the number of pixels in the image file is reduced, not only the image quality gets deteriorated, but also the number of pixels changes every time the images are recorded and hence the uniformity of the backed up image files will be lost.

The above problems occur in a similar manner also when converting image files into DVD-Video standard files for recording in a DVD-R, or when converting image files into HDTV standard files for recording in a Blu-ray disk, and also, without restricting to the case of recording image files in a recording medium, these problems also occur even when recording in an internal storage section such as a hard disk drive, etc. In addition, without restricting to the case of recording image files, these problems occur in a similar manner even in the case of recording other types of files.

### DISCLOSURE OF THE INVENTION

The present invention was made considering the above problems, and the main purpose of the present invention is to provide an information recording apparatus, and an information recording method and recording program that can record files with a large number of pixels and with an appropriate size in a recording medium such as a CD-R/RW or DVD±R/RW, a DVD-RAM, a Blu-ray disk, etc., or in a recording section such as an HDD, etc.

In order to achieve the above purpose, the information recording apparatus according to the present invention, in an information recording apparatus that records the file that has been input in a recording medium, is provided with at least a section that inputs said files, a section that compares the number pixels of said file with a predetermined prescribed number of pixels, if the number of pixels of said file and said predetermined prescribed number of pixels are different from each other, a section that converts said file so that its number of pixels becomes equal to said predetermined prescribed number of pixels, and a section that records in said recording medium said file in which the number of pixels has been converted, or said file in which the number of pixels has been converted and said file that has been input.

In the present invention, it is desirable that said prescribed number of pixels is a number of pixels selected from within the range that can be set according to the standards corresponding to said recording medium, and this can be a number of pixels larger than 360 x 240 pixels if said recording medium is a CD-R/RW, a number of pixels larger than 702 x 480 or 720 x 480 pixels if said recording medium is a DVD±R/RW, or can be a number of pixels larger than 700 pixels in the vertical direction if said recording medium is a Blu-ray disk.

Further, the information storing apparatus according to the present invention is provided with at least, in an information recording apparatus that records one or a plurality of files that have been input in a recording medium or in a storage section, a section that inputs said files, a section that compares the size that can be recorded in said recording medium or in said recording section with the total capacity of said files, if the total capacity of said files is larger than said size that can be recorded, a section that compresses said files, and a section that records in said recording medium or in said recording section said compressed files, or said compressed files and said files that have been input.

In the present invention, in said compressing section, it is desirable that the size of the file is compressed without changing the number of pixels of said file, but by reducing the color information or the number of frames.

Further, in the present invention, in addition, it is possible to have a configuration in which is provided a section that converts said file that has been input, said file whose number of pixels has been converted or said compressed file into files of any one of the standards of Video-CD, DVD-Video, or HDTV, and in said recording section, it is also possible to have a configuration in which said standard converted files are recorded in an area towards the inside in said disk type recording medium than the area in which at least one of said file with number of pixels converted and said compressed file, or, at least one of said file with number of pixels converted and said compressed file and said file that has been input have been recorded.

Further, in the present invention, it is possible that said files are image files based on the photo images photographed using a digital camera.

In addition, the recording program according to the present invention can make a computer function as at least, a section that compares the number pixels of said file with a predetermined prescribed number of pixels, if the number of pixels of said file and said predetermined prescribed number of pixels are different from each other, a section that converts said file so that its number of pixels becomes equal to said predetermined prescribed number of pixels, and a section that records in said recording medium said file in which the number of pixels has been converted, or said file in which the number of pixels has been converted and said file that has been input.

Further, the recording program according to the present invention can make a computer function as at least, a section that compares the size that can be recorded in said recording medium or in said recording section with the total capacity of said one or a plurality of files that have been input, if the total capacity of said files is larger than said size that can be recorded, a section that compresses said files, and a section that records in said recording medium or in said recording section said compressed files, or said compressed files and said files that have been input.

Further, the information recording method according to the present invention is provided with at least a step of inputting said files, a step of comparing the number pixels of said file with a predetermined prescribed number of pixels, if the number of pixels of said file and said predetermined prescribed number of pixels are different from each other, a step of converting said file so that its number of pixels becomes equal to said predetermined prescribed number of pixels, and a step of recording in said recording medium said file in which the number of pixels has been converted, or said file in which the number of pixels has been converted and said file that has been input.

Further, the information recording method according to the present invention is provided with at least a step of inputting one or a plurality of files, a step of comparing the size that can be recorded in said recording medium or in said recording section with the total capacity of said files, if the total capacity of said files is larger than said size that can be recorded, a step of compressing said files, and a step of recording in said recording medium or in said recording section said compressed files, or said compressed files and said files that have been input.

In this manner, in the information recording apparatus according to the present invention, by providing a number of pixels comparing section that compares the number of pixels in the file that has been input with a prescribed number of pixels with a higher resolution than the number of pixels set normally in a standard corresponding to the recording medium in which the file is to be recorded, if these numbers of pixels are different from each other, a number of pixels conversion section that converts, irrespective of the number of pixels in the original file, that file so that the number of pixels becomes equal to the prescribed number of pixels, since the files that have been input are always recorded in the recording medium with a large number of pixels, it is possible to reproduce the recorded files with a high picture quality.

Further, by providing in the information recording apparatus, a size comparing section that compares the recordable size of the destination of recording such as the recording media or the HDD in which the files that have been input are recorded with the total size of one or a plurality of files that have been input, if the total size of the files is more than the recordable size of the destination of recording, a file compressing section that compresses the files without changing the number of pixels in the files, since the files that have been input are recorded in the recording medium with appropriate sizes, it is possible to prevent the problems such as the recording being not possible due to insufficient capacity of the recording destination.

### BRIEF DESCRIPTION OF THE DRAWINGS

Figure 1 is a diagram showing schematically the configuration of an information recording apparatus according to a first preferred embodiment of the present invention.
Figure 2 is a diagram showing schematically another configuration of an information recording apparatus according to a first preferred embodiment of the present invention.
Figure 3 is a diagram showing schematically another configuration of an information recording apparatus according to a first preferred embodiment of the present invention.
Figure 4 is a diagram showing schematically another configuration of an information recording apparatus according to a first preferred embodiment of the present invention.
Figure 5 is a block diagram showing a configuration of an information recording apparatus according to a first preferred embodiment of the present invention.
Figure 6 is flow chart showing the procedure of the information recording method according to a first preferred embodiment of the present invention.
Figure 7 is a diagram showing the file recording area in a recording medium according to a first preferred embodiment of the present invention.
Figure 8 is a diagram showing schematically the structure of a recording medium (CD-R).
Figure 9 is a block diagram showing a configuration of an information recording apparatus according to a second preferred embodiment of the present invention.
Figure 10 is flow chart showing the procedure of the information recording method according to a second preferred embodiment of the present invention.
Figure 11 is flow chart showing another procedure of the information recording method according to a second preferred embodiment of the present invention.

### BEST MODE FOR CARRYING OUT THE INVENTION

The information recording apparatus according to the present invention, in a preferred embodiment, is provided with at least, a file input section that inputs one or more image files from a digital camera or a medium, a number of pixels comparing section that compares the number of pixels in the file that has been input with a prescribed number of pixels with a higher resolution than the number of pixels set normally in a standard corresponding to the recording medium in which the file is to be recorded, if these numbers of pixels are different from each other, a number of pixels conversion section that converts, irrespective of the number of pixels in the original file, that file so that the number of pixels becomes equal to the prescribed number of pixels, a size comparing section that compares the recordable size of the recording medium with the total size of the image files that have been input, if the total size of the files exceeds the recordable size of the recording medium, a file compressing section that compresses the files without changing the number of pixels in the files, a file conversion section that converts if necessary the image files after the number of pixels has been converted or after its size has been compressed into a format in which the files can be reproduced by the image reproduction device, and a file recording section that records the converted image files, or the converted image files and the original image files, and since the image files are always recorded in the recording medium with a large number of pixels and also with an appropriate size, it is possible to prepare recording media with a high usable value.

### (Embodiment 1)

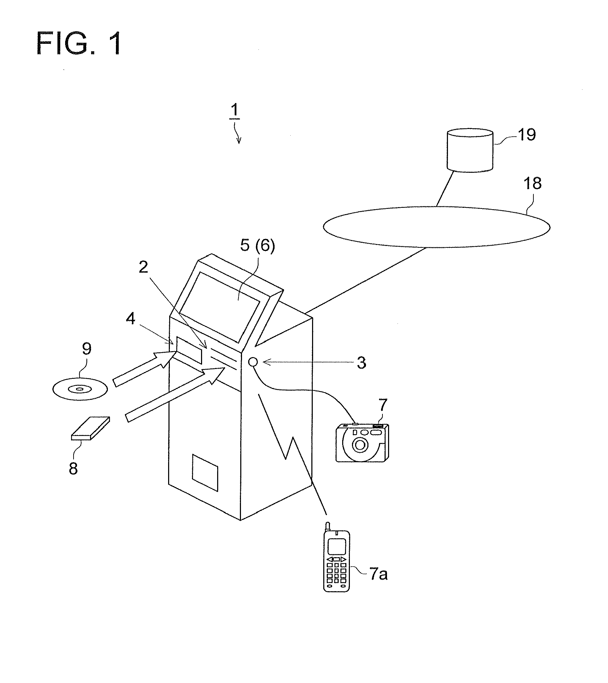

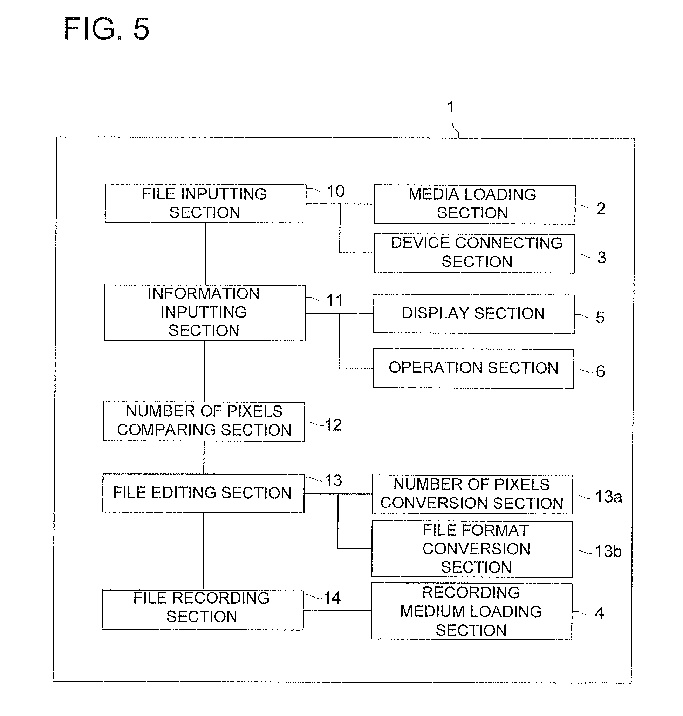

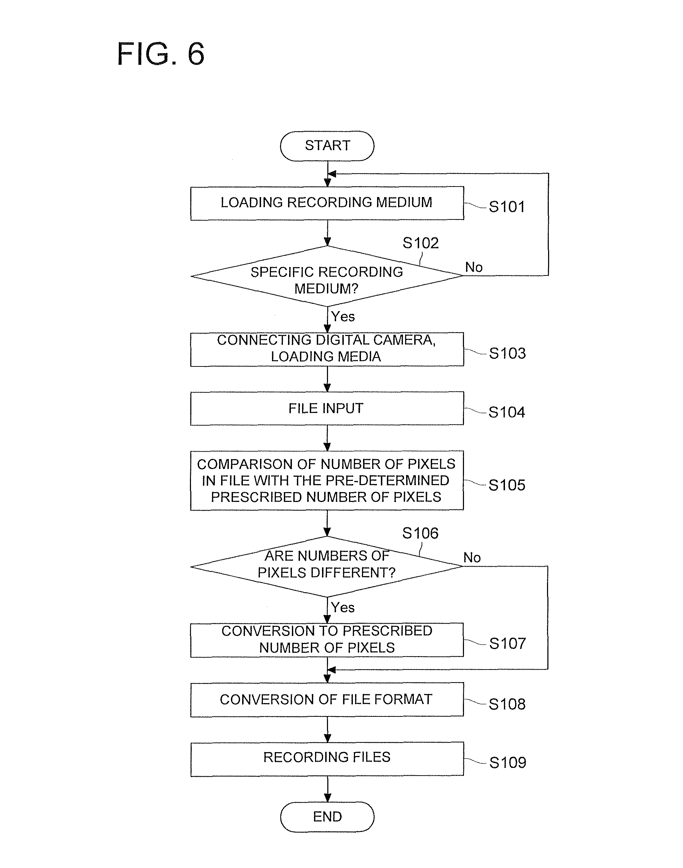

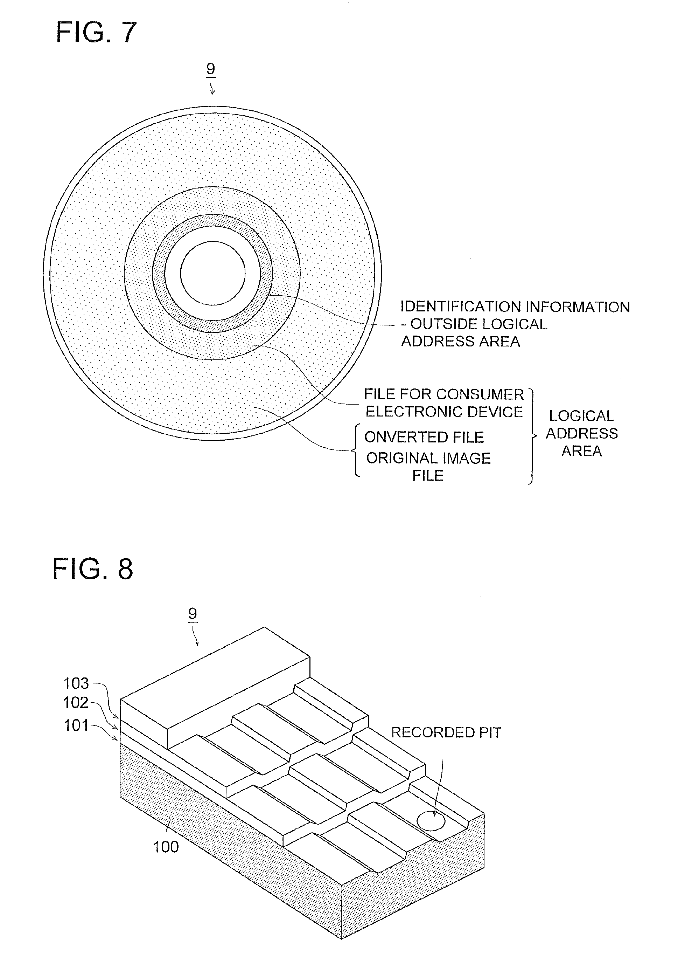

In order to describe in detail the above preferred embodiment, the information recording apparatus, information recording method and recording program according to a first preferred embodiment of the present invention is described below with reference to Figure 1 to Figure 8. Figures 1 to Figure 4 are external view diagrams showing schematically the configuration of an information recording apparatus according to the present preferred embodiment. Further, Figure 5 is a block diagram showing the functions of the information recording apparatus, Figure 6 is a flow chart showing the procedure of the information recording method according to the present preferred embodiment. In addition, Figure 7 is a diagram showing schematically the file recording area in the recording medium in the present preferred embodiment, and Figure 8 is a diagram showing schematically the structure of a recording medium (CD-R).

As is shown in Figure 1, the information recording apparatus 1 of the present preferred embodiment is provided with a media loading section 2 for loading the recording media of digital camera or mobile phones with camera such as Smart Media, Compact Flash®, Memory Stick®, SD memory card, multimedia card, etc., (these are referred to hereinafter as media 8), a device connection section 3 for connecting with wires or by radio waves, or by infrared rays the photographing equipment such as a digital camera 7 or a mobile telephone 7a with camera (referred to as digital camera 7 in the explanations below), a file input section such as a network connection section that downloads files from a server 19 via a communication network 18 such as the internet, a recording medium loading section 4 for loading the recording medium 9 such as CD-R/RW, or DVD±R/RW, or Blu-ray disks for recording the still image files, video image files, music and voice files, contents files, application files, etc., (hereinafter referred to merely as files), an operation section 6 such as buttons, keyboard, mouse, etc., and a display section 5 with an LCD, or a CRT, etc., (a touch panel has been shown in the display section 5 which combines the operation section 6 and the display section 6).

In addition, the functions of the information recording apparatus 1 become as shown in Figure 5 when expressed as a block diagram. In other words, it is provided with a media loading section 2, a device connection section 3, a file input section 10 that inputs files using network connection section, etc., an information input section 11 with a display section 5 or an operation section 6, etc., a number of pixels comparing section 12 that compares the number of pixels in the files that have been input with a prescribed number of pixels with a higher resolution than the number of pixels set normally in a standard corresponding to the recording medium in which the file is to be recorded (hereinafter referred to simply as prescribed number of pixels), if the number of pixels of the input file and the prescribed number of pixels are different from each other, irrespective of the number of pixels in the input file (that is, when the number of pixels of the input file is more than or less than the prescribed number of pixels), a file editing section 13 such as a number of pixels conversion section 13a that converts the input file so that the number of pixels becomes equal to the prescribed number of pixels, or a file format conversion section 13b that converts said file whose number of pixels has been set to the prescribed number of pixels into a file in any one of the standards of Video-CD, DVD-Video, or HDTV that can be used in an image reproduction device such as a DVD player or a DVD recorder, and a file recording section 14 that records in the recording medium 9 the converted file (at least one of the file with the number of pixels converted, and the file with the standard converted), or the converted image file and the original image file.

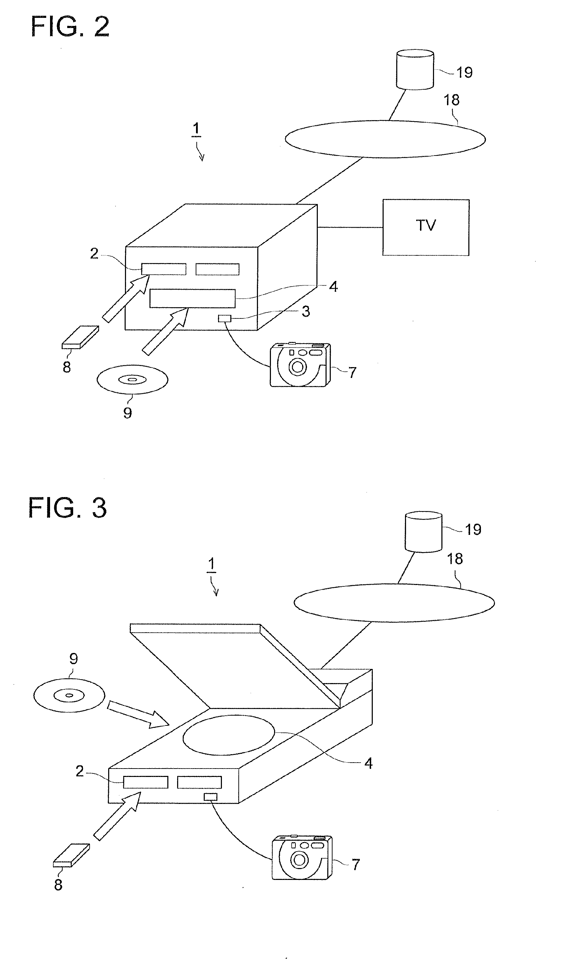

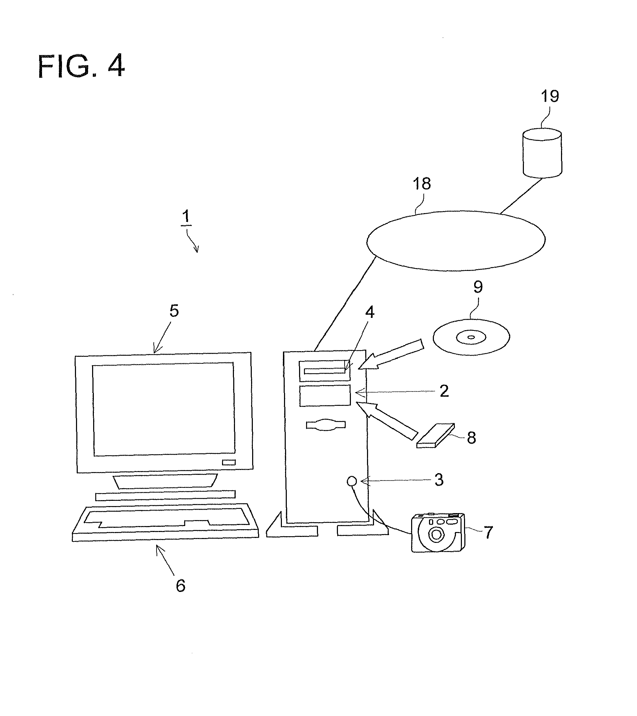

Further, the number of pixels of a file in the present patent specification is a concept that not only refers to the number of pixels in an image file but also includes the number of pixels of the image information of the file that includes image information in a part of it. In addition, in the present preferred embodiment, although a file format conversion section 13b has been provided in the file editing section 13 because the configuration is one in which the still image files that have been input are converted into video files of a format that can be reproduced in an image reproducing device, it is not necessary to provide the file format conversion section 13b if the input file is to be used in a personal computer, etc. Further, it is also possible that each of the above sections are configured in the information recording apparatus as hardware, and it is also possible to have a configuration in which a recording program is installed that makes the computer function at least as a number of pixels comparing section 12, a number of pixels conversion section 13a, and a file recording section 14, and the above sections are executed by this recording program. In addition, although in Figure 1 a kiosk type image recording apparatus 1 has been shown that can be installed in a shop such as a photo shop or a convenience store, the form of the information recording apparatus 1 can be any thing, for example, it can be a dedicated set top box as is shown in Figure 2, or can be a portable writer as is shown in Figure 3, or the above recording program can be installed in a personal computer provided with a file input section 10 as shown in Figure 4, or a DVD recorder, etc., can be used.

Next, the procedure up to writing a file in a recording medium 9 using an information recording apparatus 1 with the above configuration is explained here referring to the flow chart diagram of Figure 6. However, although the explanation given in the following is for the case of preparing a video file with a format that can be reproduced in an image reproducing device from a still image file obtained by photographing using a digital camera, it is possible to apply in a similar manner also to the case when a video file such as avi, etc., is input and that file is converted into a video file such as mpeg1, mpeg2, etc., that can be reproduced in an image reproducing device, or to the case when a still image file unique to the digital camera is input and that file is to be converted into a still image file such as jpeg, etc., that can be reproduced in an image reproducing device.

To begin with, in Step S101, a recording medium 9 such as a CD-R/RW disk, a DVD±R/RW disk, a DVD-RAM disk, or a Blu-ray disk, etc., is loaded into the recording medium loading section 4 of the information recording apparatus 1. Although it is possible to use any recording media sold in the market as this recording medium 9, it is also possible to make it so that file conversion is done only for specific recording media 9, and in this case, in Step S102 it is possible to identify the recording medium 9 based on whether or not identification information for identifying the recording medium has been recorded in a prescribed area of the recording medium 9. Although the content of this identification information is not restricted, since even the identification information itself will be copied if the content of the identification information can be easily known, it is desirable that at least a part of the identification information is information for which it is not possible to control the content of recording by the operating system OS of the computer, in concrete terms, information of the program memory area, or information based on guide groove modulation assigned at the time of forming the CD-R (ATIP: Absolute Time In Pre-groave).

Here, explaining the manufacture of a general recording medium 9 (CD-R) using Figure 8, although information is recorded in a CD-R disk by forming an organic dye layer 101 of cyanine, pthalocyanine, azo, etc., a reflective layer 102 of silver, etc., and a protective layer 103 one upon the other on a polycarbonate substrate 100, and by forming pits by emitting a laser beam with a prescribed power on the organic dye layer 101 thereby dissociating the dye and deforming the substrate, since the optimal value of the laser power differs depending on the method of the laser head that emits the laser light or the type of the organic dye layer 101 used, in order to carry out information writing definitely it is necessary for the drive to recognize type of CD-R disk or the recommended value of the laser recording power. Therefore, the information such as the application code of the disk or the recommended value of the laser recording power are written in at the time of manufacturing the recording medium as the information based on absolute time in pre-groove (ATIP), this information is read out by the firmware of the drive, and the firmware adjusts the laser power by independently controlling the laser head. Since this type of absolute time in pre-groove (ATIP) can only be prepared at the time of manufacture, it is possible to prevent copying at the user level. In addition, the read in start time, maximum read out startable time, etc., that are absolute time in pre-groove (ATIP) other than the above too can be used as identification information by making appropriate settings.

Next, in Step S103, a media 8 is loaded in the media loading section 2 of the information recording apparatus, or a digital camera 7 is connected to the device connection section 3, or the network connection section is connected to the communication network 18, and in Step S104, using the file input section 10, the image files stored in the digital camera 7 or in the media 8 or the image files recorded in the server 19 are input. However, the recording media 9 loaded in the recording media loading section 4 can be an unused recording medium in which no files have been recorded, or can be a used recording medium in which files have been recorded beforehand.

Next, in Step S105, in the number of pixels comparing section 12, the number of pixels in the file is obtained from the header information of the file that has been input, and this number of pixels in the file is compared with a predetermined prescribed number of pixels. This prescribed number of pixels is the number of pixels selected from the number of pixels that can be set in the standards corresponding to the recording medium 9, although conventionally the file that has been input was being converted to the number of pixels set as standard within the above range (for example, 360 x 240 pixels in the case of a CD-R with a capacity of about 700MB so that it is possible to record about 90 minutes of video files, 720 x 480 pixels in the case of a DVD-R with a capacity of about 4.9GB so that it is possible to record about 90 minutes of video files, and about 700 pixels in the vertical direction in the case of a Blu-ray disk with a capacity of about 20GB so that it is possible to record about 2 hours of video files), in the present preferred embodiment, so that the files can be reproduced with higher image quality, a higher resolution number of pixels (for example, a number of pixels larger than 360 x 240 pixels in the case of a CD-R, desirably 702 x 480 or 720 x 480 pixels, a number of pixels larger than 720 x 480 in the case of a DVD-R, desirably 1024 x 768 pixels, and a larger number of pixels in the vertical direction than 700 pixels in the case of a Blu-ray disk, desirably 1280 x 1024 pixels) have been set than the above number of pixels set as standard.

Further, in Step S106, when the number of pixels in the file that has been input is different from the prescribed number of pixels, in Step S107, using the number of pixels conversion section 13a, the number of pixels in the file that has been input is converted to the prescribed number of pixels. Here, when the numbers of pixels are different, there are the two cases of the number of pixels in the file that has been input being higher or lower than the prescribed number of pixels, and in either case the number of pixels in the file that has been input is converted so that it becomes equal to the prescribed number of pixels. For example, if the number of pixels of the input file is larger, the number of pixels in the file is reduced to bring it to the prescribed number of pixels, and if the number of pixels of the input file is smaller, additional pixels are added to the file to make it equal to the prescribed number of files.

Next, when preparing a file that can be reproduced in an image reproducing device, in Step S108, using the file format converting section 13b, the file that has been set to a prescribed number of pixels (still image file) is converted into a file with a format that can be reproduced in an image reproducing device (for example, Video-CD in the case of a CD-R, DVD-Video in the case of a DVD-R, HDTV standard file in the case of a Blu-ray disk), using a method such as adding the difference component data based on the slide effect, etc. However, it is possible to omit this step in the case when the file is not converted into a file that can be reproduced in an image reproducing device as above. Also, here, although the conversion of the number of pixels in the file in Step S107 and the file format conversion in Step S108 were made here separately in this order, this procedure is only for the sake of convenience, it is possible to carry out these operations simultaneously if it is possible to carry out also the conversion of the number of pixels at the time of file conversion.

Next, in Step S109, using the data recording section 14, at least either one of the file that has been set to the prescribed number of pixels and that file with its format converted to one that can be reproduced in an image reproducing device, or at least one of these files and the original image file are recorded in the recording medium 9. Here, when recording in the recording medium 9 at least either one of the file that has been set to the prescribed number of pixels and the original image file, since the recording area from which a file can be read out in a consumer electronic device is limited, initially, the file for consumer electronic devices is written on the inner periphery side of the logical address area of the recording medium 9, and then, after closing the session if necessary, at least either one of the file that has been set to the prescribed number of pixels and the original file, or if necessary the reduced images file such as the file of thumbnail images or the screen nail images file, etc., applications such as the slide show program, settings file and information for slide show, etc., are written on the outside of the file for consumer electronic devices that was recorded earlier in the recording medium 9.

When recording at least one among the above, the file for image reproducing device, the file set to the prescribed number of pixels, and the original image file, in the recording medium 9, the different types of information shown in Figure 7 are recorded, the identification information is recorded outside the innermost logical address area of the disk type recording medium 9, and the file for consumer electronic devices is recorded on the inner periphery of the logical address area located outside it, and in the area outside it is recorded at least one of the file set for the prescribed number of pixels and the original image file.

In this manner, in the information recording apparatus, and in the information recording method and recording program according to the present preferred embodiment, since the input file is not recorded in the recording medium 9 as it is or after only converting its format, but since the recording is done by converting the number of pixels to a prescribed number of pixels that has a higher resolution than the standard number of pixels and that is selected from within the range that can be set for standard corresponding to the recording medium 9, it is possible to record the input file always with a high resolution in the recording medium 9, and it is possible to prepare a recording medium 9 with a high usage value.

### (Embodiment 2)

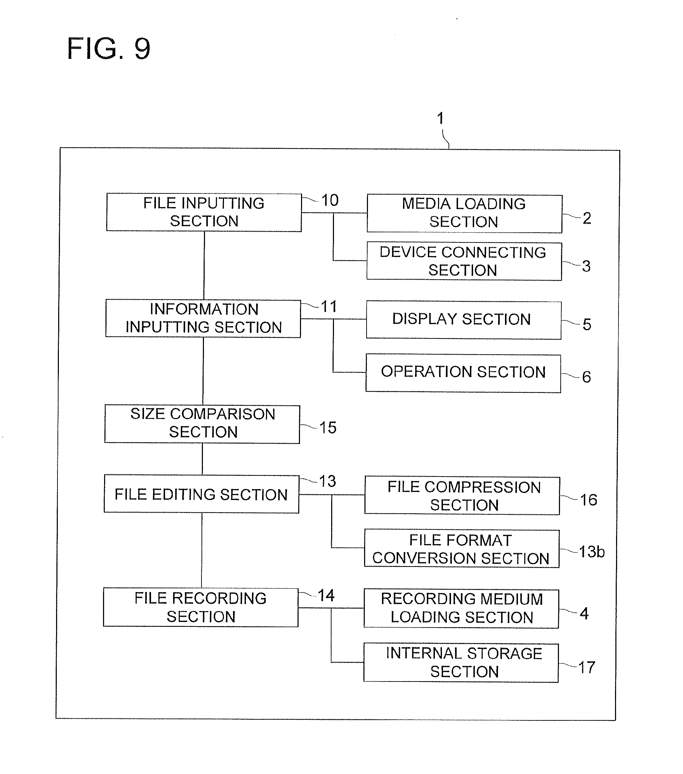

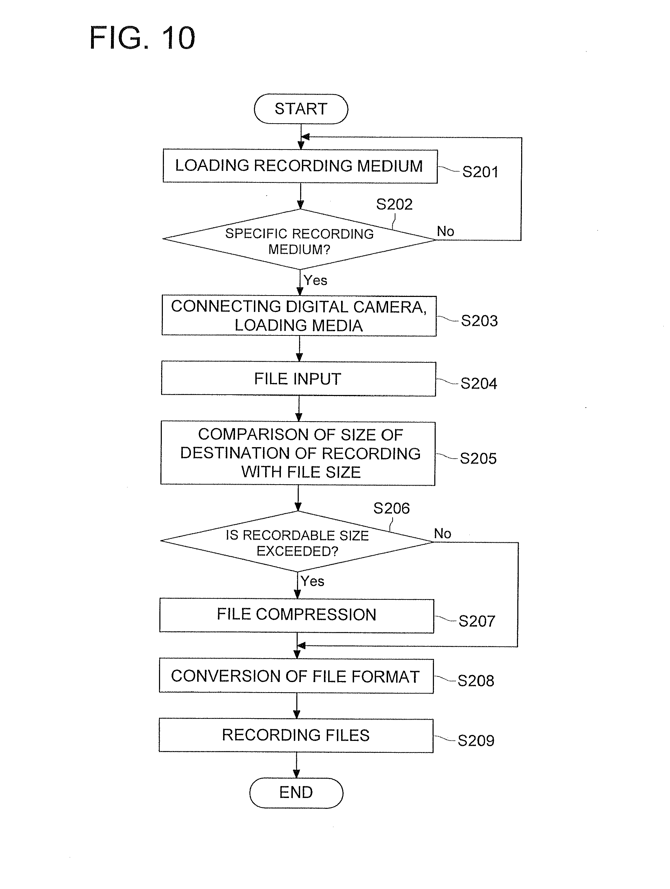

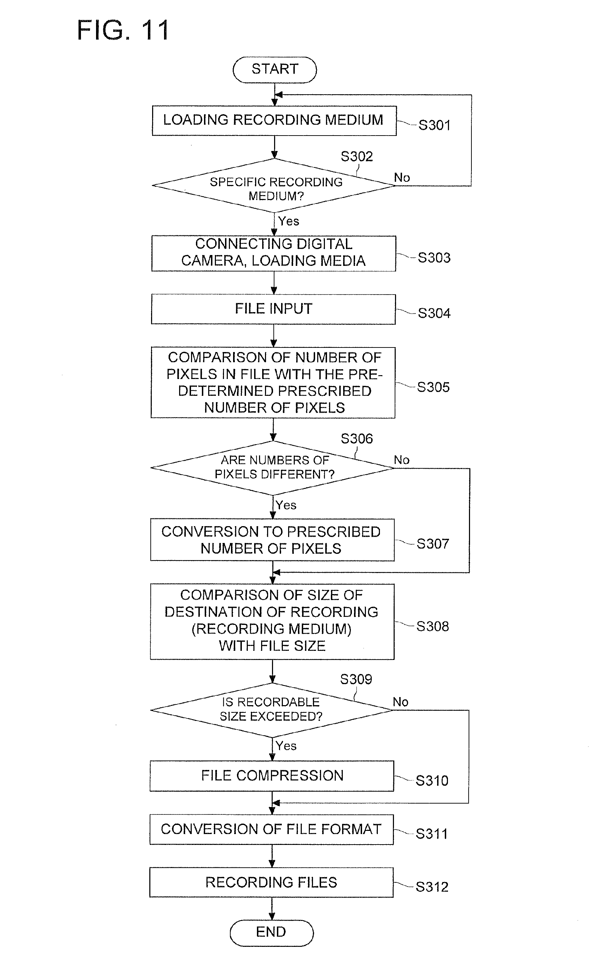

Next, the information recording apparatus, information recording method and recording program according to a second preferred embodiment of the present invention is described below with reference to Figure 9 to Figure 11. Figure 9 is a block diagram showing the functions of the information recording apparatus, Figure 10 and Figure 11 are flow charts showing the procedure of the information recording method according to the present preferred embodiment.

The functions of the information recording apparatus 1 according to the present preferred embodiment become as shown in Figure 9 when expressed as a block diagram. In other words, it is provided with a media loading section 2, a device connection section 3, a file input section 10 that inputs files using a network connection section, etc., an information input section 11 with a display section 5 or an operation section 6, etc., a size comparing section 15 that compares the recordable size of the destination of recording (the recording media 9 or the internal storage section 17 such as an HDD, etc.,) with the total size of one or a plurality of files that have been input, if the total size of the files that have been input exceeds the recordable size of the destination of recording, a file editing section 13 such as a file compression section 16 that compresses the size without changing the number of pixels of the input file, and a file format conversion section 13b that converts said file which has been compressed to an appropriate size into a file in any one of the standards of Video-CD, DVD-Video, or HDTV that can be used in an image reproduction device such as a DVD player or a DVD recorder, and a file recording section 14 that records the converted file (at least one among the compressed file and the file with the standard converted), or the converted image file and the original image file in the recording medium 9 or in the internal storage section 17 such as an HDD, etc.

Further, even in the present preferred embodiment, although a file format conversion section 13b has been provided in the file editing section 13 because the configuration is one in which the still image files that have been input are converted into video files of a format that can be reproduced in an image reproducing device, it is not necessary to provide the file format conversion section 13b if the input file is to be used in a personal computer, etc. Further, it is also possible that each of the above sections are configured in the information recording apparatus as hardware, and it is also possible to have a configuration in which a recording program is installed that makes the computer function at least as a size comparing section 15, a file compression section 16, and a file recording section 14, and the above sections are executed by this recording program. In addition, the information recording apparatus 1 according to the present preferred embodiment can be of a kiosk type as shown in Figure 1, or can be a dedicated set top box as is shown in Figure 2, or can be a portable writer as is shown in Figure 3, or a personal computer can be used as is shown in Figure 4, or a DVD recorder, etc., can be used.

Next, the procedure up to writing a file in a recording medium 9 using an information recording apparatus 1 with the above configuration is explained here referring to the flow chart diagram of Figure 10. However, although the explanation given in the following is for the case of preparing a video file with a format that can be reproduced in an image reproducing device from a still image file obtained by photographing using a digital camera, it is possible to apply in a similar manner also to the case when a video file such as avi, etc., is input and that file is converted into a video file such as mpeg1, mpeg2, etc., that can be reproduced in an image reproducing device, or to the case when a still image file unique to the digital camera is input and that file is to be converted into a still image file such as jpeg, etc., that can be reproduced in an image reproducing device.

To begin with, in Step S201, a recording medium 9 such as a CD-R/RW disk, a DVD±R/RW disk, a DVD-RAM disk, or a Blu-ray disk, etc., is loaded into the recording medium loading section 4 of the information recording apparatus 1, and if necessary, in Step S202 the recording medium 9 is identified based on whether or not the identification information for identifying the recording medium has been recorded in a prescribed area of the recording medium 9.

Next, in Step S203, a media 8 is loaded in the media loading section 2 of the information recording apparatus 1, or a digital camera 7 is connected to the device connection section 3, or the network connection section is connected to the communication network 18, and in Step S204, using the file input section 10, the image files stored in the digital camera 7 or in the media 8 or the image files recorded in the server 19 are input.

Next, in Step S205, using the size comparison section 15, the recordable size of the destination of recording (the recording medium 9 or the internal storage section 17 such as an HDD, etc., is obtained (for example, if the destination of recording is to be the recording medium 9, the recordable area of the recording medium 9 is obtained from the information, etc., that is recorded outside the logical address area of the recording medium 9), and this recordable size is compared with the total size of the one or a plurality of files that have been input.

Next, in Step S206, when the size of the total size of the files that have been input exceeds the recordable size of the destination of recording, in Step S207, using the file compression section 16, file compression is carried out in order to reduce the size of the files that have been input. As a method of this file compression, although there is the method of reducing the number of pixels in the file, if the number of pixels in the file is reduced, it will not be possible to utilize effectively files of high resolution obtained by a digital camera such as those shown in the first preferred embodiment. Therefore, in the present preferred embodiment, in order to reduce the size without having to reduce the number of pixels, for example, in the case of still images files, the color information, etc., of the still image files is reduced, for example, by reducing the number of colors from 16.67 million colors to 256 colors, etc., and in the case of video image files, the time information of the video image file is reduced, such as by reducing the number of frames per second, thereby reducing the size of the file so that it fits in the recording medium 9.

Next, when preparing a file that can be reproduced in an image reproducing device, in Step S208, using the file format converting section 13b, a file with a format that can be reproduced in an image reproducing device (for example, Video-CD in the case of a CD-R, DVD-Video in the case of a DVD-R, HDTV standard file in the case of a Blu-ray disk) is prepared using a method such as adding the difference component data based on a predetermined slide effect, etc., to the file that has been compressed to an appropriate size (still image file). However, even in the present preferred embodiment, it is possible to omit this step in the case when the file is not converted into a file that can be reproduced in an image reproducing device as above. Also, here, although the file compression in Step S207 and the file format conversion in Step S208 were made here separately in this order, this procedure is only for the sake of convenience, for example, in the case of reducing the number of frames per second, since it is convenient to carry out also file compression at the time of file conversion, it is possible to have a configuration in which these operations carried out simultaneously.

Next, in Step S209, using the data recording section 14, at least either one of the file that has been compressed to an appropriate size and that file with its format converted to one that can be reproduced in an image reproducing device, or, at least one of these files and the original image file are recorded in the recording medium 9 or in the internal storage section 17. At this time, when recording in the recording medium 9 at least one among the file with the format converted so that it can be reproduced in an image reproducing device and the file that has been compressed to an appropriate size, and the original image file, the file for consumer electronic devices is written on the inner periphery side of the logical address area of the recording medium 9, and after closing the session if necessary, at least either one of the file that has been compressed to an appropriate size and the original file, or if necessary the reduced images file, applications such as the slide show program, settings file and information file for slide show, etc., are written on the outside of the file for consumer electronic devices that was recorded earlier in the recording medium 9.

In this manner, in the information recording apparatus, and in the information recording method and recording program according to the present preferred embodiment, since the input file is not recorded in the recording medium 9 as it is or after only converting its format, but, if the file cannot fit in the destination of recording, since the recording is done by compressing the size without changing the number of pixels, it is possible to prevent the problem of the files that have been input not fitting into the recording medium 9, and to record the input file always with an appropriate size in the recording medium 9.

Further, although the present preferred embodiment is one in which, in the case when the files that have been input do not fit into the destination of recording, the size of the files is compressed without changing the number of pixels, it is also possible to combine the first preferred embodiment in which the number of pixels in the file is converted into a prescribed number of pixels with the present preferred embodiment in which file compression is carried out. As the procedure in this case, explanation is given below referring to the flow chart of Figure 11.

To begin with, in Step S301, a recording medium 9 such as a CD-R/RW disk, a DVD±R/RW disk, a DVD-RAM disk, or a Blu-ray disk, etc., is loaded into the recording medium loading section 4 of the information recording apparatus 1, and if necessary, in Step S302 the recording medium 9 is identified based on whether or not the identification information for identifying the recording medium has been recorded in a prescribed area of the recording medium 9.

Next, in Step S303, a media 8 is loaded in the media loading section 2 of the information recording apparatus 1, or a digital camera 7 is connected to the device connection section 3, or the network connection section is connected to the communication network 18, and in Step S304, using the file input section 10, the image files stored in the digital camera 7 or in the media 8 or the image files recorded in the server 19 are input.

Next, in Step S305, using the number of pixels comparing section 12, the number of pixels in the file is obtained from the header information of the file that has been input, and this number of pixels in the file is compared with a predetermined prescribed number of pixels.

Further, in Step S306, when the number of pixels in the file that has been input is different from the prescribed number of pixels (includes both the cases when the number of pixels in the file that has been input is higher or lower than the prescribed number of pixels), in Step S307, the number of pixels in the file that has been input is converted to the prescribed number of pixels either by deleting some pixels or adding some pixels.

Next, in Step S308, using the size comparison section 15, the recordable size of the recording medium 9 is obtained from the information that is recorded beforehand in the recording medium 9, and this recordable size is compared with the total size of the files that have been converted into the prescribed number of pixels.

Next, in Step S309, when the size of the total size of the files that have been input exceeds the recordable size of the recording medium 9, in Step S308, using the file compression section 16, without changing the number of pixels in the input file, the size of the files is compressed by reducing the color information of still image files or by reducing the number of frames per second in video image files, thereby reducing the size of the file so that all the files fit in the recording medium 9.

Next, when preparing a file that can be reproduced in an image reproducing device, in Step S310, using the file format converting section 13b, a file with a format that can be reproduced in an image reproducing device is prepared, and in Step S311, using the data recording section 14, at least either one of the file that which has been converted to the prescribed number of pixels and, if necessary, has been compressed and that file with its format converted to one that can be reproduced in an image reproducing device, or, at least one of these files and the original image file are recorded in the recording medium 9. At this time, in a similar manner, when recording at least one among the file with the format converted so that it can be reproduced in an image reproducing device, the file that has been converted to the prescribed number of pixels and, if necessary, has been compressed, and the original image file in the recording medium 9, the file for consumer electronic devices is written on the inner periphery side of the logical address area of the recording medium 9, and after closing the session if necessary, at least any one of the file that has been converted to the prescribed number of pixels and, if necessary, has been compressed, and the original file, or, if necessary, the reduced images file, applications such as the slide show program, settings file and information file for slide show, etc., are written on the outside of the file for consumer electronic devices that was recorded earlier in the recording medium 9.

In this manner, since the input file is not recorded in the recording medium 9 as it is or after only converting its format, but since not only it is recorded with the prescribed number of pixels and, if the file cannot fit in the recording medium 9, since the recording is done by compressing the size without changing the number of pixels, it is possible to record the input file always with a large number of pixels and it is possible to prepare a recording medium 9 with a high value.

Further, in each of the above preferred embodiments, although the configuration was one in which the files recorded in a digital camera 7 or media 8 are written in the recording medium 9, the present invention is not limited to the above preferred embodiments, but can be applied to the writing of any file, and can be applied, for example, in a similar manner to the music files, contents, or applications downloaded via the internet.

### INDUSTRIAL APPLICABILITY

The following effects are obtained according to the information recording apparatus, and information recording method and recording program.

A first effect of the present invention is, irrespective of the number of pixels in the file that has been input, it is possible to record in the recording medium always with a large number of pixels.

The reason for this is that, a number of pixels comparison section that compares the number of pixels in the files that have been input with a prescribed number of pixels that is of a higher resolution than the number of pixels that is set as standard for the standard corresponding to the recording medium in which the files have to be recorded, and a number of pixels conversion section that, if the number of pixels is different, converts the file, irrespective of the number of pixels in the original file, have been provided so that the number of pixels in that file becomes equal to the prescribed number of pixels.

Further, a second effect of the present invention is that, even if the size of the input file is large, it is possible to record the file with an appropriate size, without decreasing the number of pixels.

The reason for this is that, a size comparison section that compares the recordable size in the recording medium or in the destination of recording such as an HDD, etc., in which the files that have been input are to be recorded with the total size of the one or a plurality of files that have been input, and if the total size of the input files exceeds the recordable size of the destination of recording, a file compression section that compresses the size of the files without changing the number of pixels have been provided.

Further, by recording the image files obtained from a digital camera in a recording medium using such sections, it is possible to reproduce the image files with a large number of pixels, and to increase the usable value of the recording medium.

## Claims

1. An information recording apparatus that records a file having been input in a recording medium, comprising at least:
a section that inputs said file,
a section that compares the number of pixels in said file with a pre-determined prescribed number of pixels,
a section that, in case the number of pixels in said file and said prescribed number of pixels are different, converts said file so that the number of pixels in that file becomes equal to the prescribed number of pixels, and
a section that records said file with the number of pixels converted, or, said file with the number of pixels converted and said file that has been input in said recording medium.

2. An information recording apparatus according to claim 1, **characterized in that** said prescribed number of pixels is a number of pixels selected from the range that can be set according to the standard corresponding to said recording medium.

3. An information recording apparatus according to claim 2, **characterized in that** said prescribed number of pixels is a number of pixels larger than 360 x 240 pixels when said recording medium is a CD-R/RW, a number of pixels larger than 720 x 480 pixels when said recording medium is a DVD±R/RW, and a number of pixels larger than 700 pixels in the vertical direction when said recording medium is a Blu-ray disk.

4. An information recording apparatus that records one or a plurality of files having been input in a recording medium or a storage section, comprising at least:
a section that inputs said files,
a section that compares the recordable size of said recording medium or of said storage section with the total size of said files,
a section that, in case the total size of said files exceeds the recordable size, compresses said files, and
a section that records said compressed files, or, said compressed files and said files that have been input in said recording medium or in said storage section.

5. An information recording apparatus according to Claim 4, **characterized in that** said compressing section compresses said files, without changing the numbers of pixels of said files, by reducing the color information or the number of frames.

6. An information recording apparatus according to any one of claim 1 to claim 5, **characterized in that** it is provided with a section that converts said files that have been input, said files with the number of pixels converted or said compressed files into a file of any one of the standards of Video-CD, DVD-Video, or HDTV.

7. An information recording apparatus according to claim 6, **characterized in that** in said recording section, said file with the standard converted is recorded in an area more towards the inside, in said recording medium of disk type, than the area in which is recorded at least one of said number of pixels converted file and said compressed file, or, at least one of said number of pixels converted file and said compressed file and said file that has been input.

8. An information recording apparatus according to any one of claim 1 to claim 7, **characterized in that** said file is an image file based on photo images photographed using a digital camera.

9. A recording program that causes a computer to function sections comprising as at least:
a section that compares the number of pixels in the file that has been input with a pre-determined prescribed number of pixels,
a section that, in case the number of pixels in said file and said prescribed number of pixels are different, converts said file so that the number of pixels in that file becomes equal to the prescribed number of pixels, and
a section that records said file with the number of pixels converted, or, said file with the number of pixels converted and said file that has been input in said recording medium.

10. A recording program according to claim 9, **characterized in that** said prescribed number of pixels is a number of pixels selected from the range that can be set according to the standard corresponding to said recording medium.

11. A recording program according to claim 10, **characterized in that** said prescribed number of pixels is a number of pixels larger than 360 x 240 pixels when said recording medium is a CD-R/RW, a number of pixels larger than 720 x 480 pixels when said recording medium is a DVD±R/RW, and a number of pixels larger than 700 pixels in the vertical direction when said recording medium is a Blu-ray disk.

12. A recording program that causes a computer to function as sections comprising at least:
a section that compares the total size of one or a plurality of files that have been input with the recordable size of the recording medium or storage section in which said file or files are to be recorded,
a section that, in case the total size of said files is larger than said recordable size, compresses said file or files, and
a section that records said compressed file or files, or, said compressed file or files and said file or files that have been input in said recording medium or said storage section.

13. A recording program according to claim 12, **characterized in that** in said compressing section, the size of said file is compressed, without changing the number of pixels in said file, by reducing the color information or the number of frames.

14. A recording program according to any one of claim 9 to claim 13, **characterized in that** a computer is caused to function as a section that converts from said file that has been input, said file whose number of pixels has been converted, or said compressed file into a file in any one of the standards of Video-CD, DVD-Video, or HDTV.

15. A recording program according to claim 14, **characterized in that**, in said recording section, said file with the standard converted is recorded in an area more towards the inside, in said recording medium of disk type, than the area in which is recorded at least one of said number of pixels converted file and said compressed file, or, at least one of said number of pixels converted file and said compressed file and said file that has been input.

16. A recording program according to any one of claim 9 to claim 13, **characterized in that** said file is an image file based on photo images photographed using a digital camera.

17. An information recording method, comprising at least:
a step that inputs a file, a step that compares the number of pixels in said file with a pre-determined prescribed number of pixels,
a step that, in case the number of pixels in said file and said prescribed number of pixels are different, converts said file so that the number of pixels in that file becomes equal to the prescribed number of pixels, and
a step that records said file with the number of pixels converted, or, said file with the number of pixels converted and said file that has been input in said recording medium.

18. An information recording method according to claim 17, **characterized in that** said prescribed number of pixels is a number of pixels selected from the range that can be set according to the standard corresponding to said recording medium.

19. An information recording method according to claim 18, **characterized in that** said prescribed number of pixels is a number of pixels larger than 360 x 240 pixels when said recording medium is a CD-R/RW, a number of pixels larger than 720 x 480 pixels when said recording medium is a DVD±R/RW, and a number of pixels larger than 700 pixels in the vertical direction when said recording medium is a Blu-ray disk.

20. An information recording method, comprising at least:
a step of inputting one or a plurality of files,
a step that compares the recordable size of said recording medium or of said storage section with the total size of said files,
a step that, in case the total size of said files exceeds the recordable size, compresses said files, and
a step that records said compressed files, or, said compressed files and said files that have been input in said recording medium or in said storage section.

21. An information recording method according to claim 20, **characterized in that** in said compressing step, the size of said files is compressed without changing the numbers of pixels of said files, by reducing the color information or the number of frames.

22. An information recording method according to any one of claim 17 to claim 21, **characterized in that** a step is provided that converts said files that have been input, said files with the number of pixels converted or said compressed files into a file of any one of the standards of Video-CD, DVD-Video, or HDTV.

23. An information recording method according to claim 22, **characterized in that** in said recording step, said file with the standard converted is recorded in an area more towards the inside, in said recording medium of disk type, than the area in which is recorded at least one of said number of pixels converted file and said compressed file, or, at least one of said number of pixels converted file and said compressed file and said file that has been input.

24. An information recording method according to any one of claim 17 to claim 23, **characterized in that** said file is an image file based on photo images photographed using a digital camera.
